# FASCICULE DE BREVET EUROPEEN

(11) **EP 1 243 187 B1**
(45) Date de publication et mention de la délivrance du brevet: **14.07.2004**
(21) Numéro de dépôt: 01490012.0
(22) Date de dépôt: 20.03.2001
(51) Int. Cl.: A23N 15/00

(54) **Dispositif pour l'étrognage et l'éclatement en fleurettes des choux-fleurs, brocolis et autres légumes équivalents**
Vorrichtung zum Entfernen des Strunkes und Abtrennen der Röschen von Blumenkohl, Brokkoli und ähnlichem Gemüsen
Cauliflower, broccoli and similar vegetables core removal and small part separation device

(43) Date de publication de la demande: 25.09.2002
(73) Titulaire: Delecroix, Denis, 59173 Blaringhem (FR)
(72) Inventeur: Delecroix, Denis, 59173 Blaringhem (FR)
(74) Mandataire: Hennion, Jean-Claude

(56) Documents cités:
- EP-A- 0 347 264
- EP-A- 0 959 697
- EP-A- 1 082 913
- GB-A- 2 336 763

## Description

L'invention se rapporte au domaine technique des machines pour parer des choux-fleurs, brocolis et autres légumes équivalents.

Par brocoli, on désigne communément tous les choux-fleurs à pommes colorées (pourpre, vert), et notamment Brassica olerarea, variété botrytis sous variété cymosa. Les brocolis sont consommés depuis longtemps. Désignés sous le terme « calabrese » en Grande-Bretagne, ils sont connus depuis le 16^{ème} siècle et produits de nos jours à raison de 18 000 tonnes par an en France, essentiellement dans leur variété à pomme verte.

Généralement, dans une tête de chou-fleur ou de brocoli, on ne mange que l'inflorescence, appelée tête ou pomme et formée de fleurettes.

Le trognon, parfois appelé coeur est éliminé lors de l'étrognage, de même que les feuilles qui sont éliminées par effanage.

En particulier, dans la commercialisation des choux-fleurs ou brocolis surgelés, ce sont surtout les inflorescences, appelées fleurettes qui présentent de l'intérêt, le trognon étant peu comestible.

il est donc préférable, avant de procéder à la surgélation du chou-fleur, d'en éliminer le trognon.

Les fabricants de plats surgelés souhaitent pouvoir disposer de très grandes quantités de fleurettes prêtes à cuisiner, c'est à dire des fleurettes de taille suffisamment faible pour être cuisinées (on parle ainsi d'éclatement des têtes de choux-fleures en fleurettes).

Les choux-fleurs et brocolis sont très fragiles et lorsqu'ils sont abîmés lors de leur récolte ou de leur transformation, ils deviennent souvent impropres à la vente, voire à la consommation.

C'est pourquoi, pour l'heure, la découpe des fleurettes des brocolis est encore souvent réalisée à la main, ce qui est coûteux et fastidieux.

Il a été tenté depuis longtemps de mécaniser l'étrognage et la découpe des fleurettes de choux-fleurs ou brocolis.

Selon un premier type de montage antérieur, un cylindre à bord coupant, dont le diamètre est en moyenne celui des trognons, est passé à travers un chou-fleur dans l'axe du trognon. Ce cylindre de carottage est conventionnellement disposé au-dessus des choux posés sur des coupelles. Ce procédé, s'il permet effectivement d'éliminer le trognon, entraîne la perte des fleurettes se trouvant dans l'alignement du trognon. De plus, par un tel procédé, on n'obtient pas automatiquement la séparation des fleurettes en bouquets.

Selon une variante de ce premier type de montage antérieur, illustrée par le document FR-A-2 376 632, en regard du cylindre à bord tranchant, une ogive à ailettes tranchantes, coaxiale au cylindre tranchant, permet la séparation des fleurettes. Le montage décrit dans le document FR-A-2 376 632 présente l'inconvénient important de découper les fleurettes de manière aléatoire, et de produire ainsi des fuseaux de fleurettes sous forme de petits morceaux irréguliers, ce qui nuit à la présentation du produit et à sa mise en valeur.

Selon une deuxième variante de ce premier type de montage, illustrée par exemple par le document FR-A-2 769 180, la découpe des trognons est réalisée par des couteaux mobiles disposés en dessous des choux, le trognon de chaque chou étant placé dans l'ouverture centrale d'une coupelle dans laquelle le chou est maintenu plaqué lors de la découpe de son trognon.

Selon un deuxième type de montage antérieur, deux lames de scie circulaire découpent dans le chou un morceau en forme de coin attenant au trognon, celui-ci se trouvant ainsi extrait en totalité du chou par l'action des deux scies. Un tel procédé entraîne le plus souvent une détérioration des fleurettes et ne permet pas leur séparation mutuelle. Pour ce deuxième type de montage, on peut se référer, par exemple, au document FR-A-2 380 714.

Selon un troisième type de montage antérieur, illustré par le document FR-A-2 410 967, le chou-fleur est entraîné dans une coupelle jusque vers un poste de travail où il est placé sous trois lames en acier de forme conique, ces trois lames convergeant vers le centre de la coupelle pour former en fin de course un cône, isolant le trognon du chou-fleur des fleurettes. Le chou-fleur est posé sur les coupelles, trognon vers les lames convergentes.

Selon un quatrième type de montage antérieur, illustré par les documents FR-A-2 668 337 et EP-A-483 006, les brocolis sont tenus fleurettes vers le bas par des pinces montées sur carrousel, un premier couteau à mouvement latéral par rapport au trognon venant étêter le brocoli. Un tel montage s'avère de réglage complexe et la séparation des fleurettes est assez aléatoire, en dépit de la mise en place d'un deuxième couteau horizontal venant couper la ou les fleurettes centrales restantes sur les tiges, ainsi qu'il est proposé dans ce document FR-A-2 668 337.

Selon un cinquième type de montage antérieur, illustré par exemple par le document FR-A-2 746 262, le chou-fleur est pressé contre une pièce support comportant un élément central creux, pour l'élimination du trognon, élément central autour duquel est disposée une pluralité de lames découpant les fleurettes en quartiers.

Du document EP-A-1 082 913 un autre dispositif pour parer des choux à pommes est connu comprennant un poste de découpage contrôlé par des moyens de détection et d'analyse de chaque végétal.

Différentes variantes de mise en oeuvre des montages présentés ci-dessous peuvent être trouvées dans les documents suivants :
- demande de brevet en France publiée sous le numéro 2 766 334 ;
- demandes de brevet européen publiées sous les numéros 0 244 387, 0 262 747, 0 495 353, 0 552 902, 0 655 891, 0 853 892, 0 953 297 ;
- brevets délivrés aux Etats-Unis sous les numéros 3 320 989, 3 380 500, 3 478 794, 3 478 795, 3 490 506, 3 527 276, 3 612 124, 3 646 977, 3 695 323, 3 754 470, 3 886 857, 4 036 123, 4 041 672, 4 095 391, 4 099 456, 4 168 642, 4 176 595, 4 241 096, 4 420 118, 4 455 929, 4 480 536, 4 503 761, 4 601 156, 4 658 714, 4 674 270, 4 773 324, 4 787 305, 5 009 909, 5 074 203, 5 102 678, 5 156 874, 5 168 799, 5 168 801, 5 277 107, 5 470 602, 5 588 278, 5 590 591, 6 036 989 ;
- demandes internationales de brevet publiées sous les numéros 89 01300, 94 26134, 96 13180, 97 13418.

La particularité du brocoli est de présenter une tige principale et des tiges secondaires terminées par des fleurettes. De sorte que pour parer le brocoli, il est nécessaire de le couper au niveau des tiges secondaires au plus près possible des fleurettes. La découpe optimale doit ainsi présenter une forme demi-sphérique ou ogivale.

Les choux-fleurs présentent au contraire un aspect beaucoup plus compact, le brocoli produisant généralement une inflorescence avec des pédicelles plus minces et plus longs que ceux du chou-fleur. De sorte que les machines connues dans l'art antérieur ne parviennent pas à étrogner ou éclater correctement en fleurettes tant les choux-fleurs que les brocolis.

L'invention vise à fournir un dispositif permettant l'éclatement des choux-fleurs, brocolis, choux romanesco, ou tout autre légume à inflorescence équivalent, ce dispositif assurant une séparation des fleurettes en tailles homogènes et suffisamment faibles pour être cuisinées, ce dispositif pouvant être mis en oeuvre sur les lieux de récolte, de sorte à éviter les coûts de transport des légumes et des trognons.

Le dispositif selon l'invention doit en outre être économique notamment parce qu'il :
- ne nécessite que peu d'interventions manuelles ;
- n'engendre que très peu de pertes ou d'altérations des fleurettes ;
- évite le transport des trognons, qui peuvent être laissés sur les champs de récolte, le coeur des choux-fleurs ou brocolis pouvant représenter de 35 à 50% du poids total du légume ;
- réduit le temps entre récolte et préparation en vue d'une incorporation en plat cuisiné ou surgelé, les fleurettes parvenant ainsi dans un état de fraîcheur maximal sur les lieux de préparation ou surgélation des aliments.

Enfin, le dispositif selon l'invention doit être de structure mécanique robuste, permettant son utilisation prolongée et intensive, les pièces d'usure étant par ailleurs peu coûteuses.

A ces fins, l'invention se rapporte, selon un premier aspect, à un dispositif pour l'étrognage et l'éclatement en fleurettes des choux à pommes, comprenant un convoyeur de coupelles ou assiettes dans lesquelles sont placés les choux à pommes, ce convoyeur assurant le déplacement des coupelles selon un plan de convoyage depuis un poste de chargement des choux jusque vers au moins un poste de découpe de ces choux, ce dispositif comprenant, au dit poste de découpe, une mâchoire à deux lames en forme de ménisque pourvues chacune d'un bord tranchant, dont
- les lames sont montées sur un tablier coulissant sensiblement perpendiculairement au plan de convoyage, le dispositif comprenant des moyens de réglage de la hauteur du tablier par rapport au plan de convoyage et, par la-même, de réglage de la hauteur des lames par rapport aux coupelles;
- les moyens de réglage de la hauteur du tablier comprennent des moyens de commande de la course d'un vérin de translation du tablier sur des colonnes de guidage solidaires du châssis du dispositif ;
- les moyens de réglage de la hauteur du tablier comprennent au moins une butée d'indexation telle qu'une vis formant obstacle au mouvement de translation du tablier sur des colonnes de guidage du tablier ;
- il comprend des moyens de réglage de l'écartement des deux lames de mâchoire de découpe en position extrême d'ouverture de mâchoire.

Selon diverses réalisations, le dispositif présente les caractères suivants, éventuellement combinés :
- les moyens de réglage de l'écartement des deux lames de mâchoire en position extrême d'ouverture de mâchoire comprennent des moyens de commande de la course d'un vérin de translation d'un chariot pourvu de biellettes de commande d'ouverture de mâchoire ;
- les moyens de réglage de l'écartement des deux lames de mâchoire en position extrême d'ouverture de mâchoire comprennent au moins une butée mécanique telle qu'une vis d'indexation formant obstacle au mouvement de translation d'un chariot pourvu de biellettes de commande d'ouverture de mâchoire ;
- le chariot est pourvu de galets d'appui contre un barreau sensiblement perpendiculaire au plan de convoyage ;
- les galets d'appui roulent sur un barreau portant à son extrémité libre inférieure, des supports des lames ;
- les deux lames sont mobiles entre une position extrême d'écartement, correspondant à l'ouverture de mâchoire et une position d'appui l'une contre l'autre, correspondant à la fermeture de mâchoire, les extrémités d'une première lame étant montées sur des supports coaxiaux tournant suivant un premier axe, les extrémités de la seconde lame de mâchoire étant montées sur des supports coaxiaux tournant suivant un deuxième axe sensiblement parallèle au premier axe, les deux axes étant, au poste de découpe, sensiblement parallèles au plan de convoyage ;
- les deux axes sont sensiblement alignés, au poste de découpe, à la direction de convoyage des coupelles ;
- les coupelles sont montées de manière amovible sur une chaîne de convoyage;
- la chaîne de convoyage défile en boucle sensiblement verticale et comprend un brin supérieur au droit duquel sont disposés au moins un poste de découpe et un brin inférieur dans lequel les coupelles ont leur ouverture tournée vers le bas ;
- le convoyeur est logé dans un caisson ouvert en partie supérieure, ce caisson comprenant une paroi de fond et des parois latérales, les choux à pommes tombant après découpe dans ledit caisson lors du retournement des coupelles au cours du trajet de chaîne entre son brin supérieur et son brin inférieur ;
- des sur-coupelles sont disposées de manière amovible sur les coupelles, ces sur-coupelles comprenant une partie annulaire supérieure et des pattes de fixation latérales.

D'autres objets et avantages de l'invention apparaîtront au cours de la description suivante de modes de réalisation, description qui va être effectuée en se référant aux dessins annexés dans lesquels :

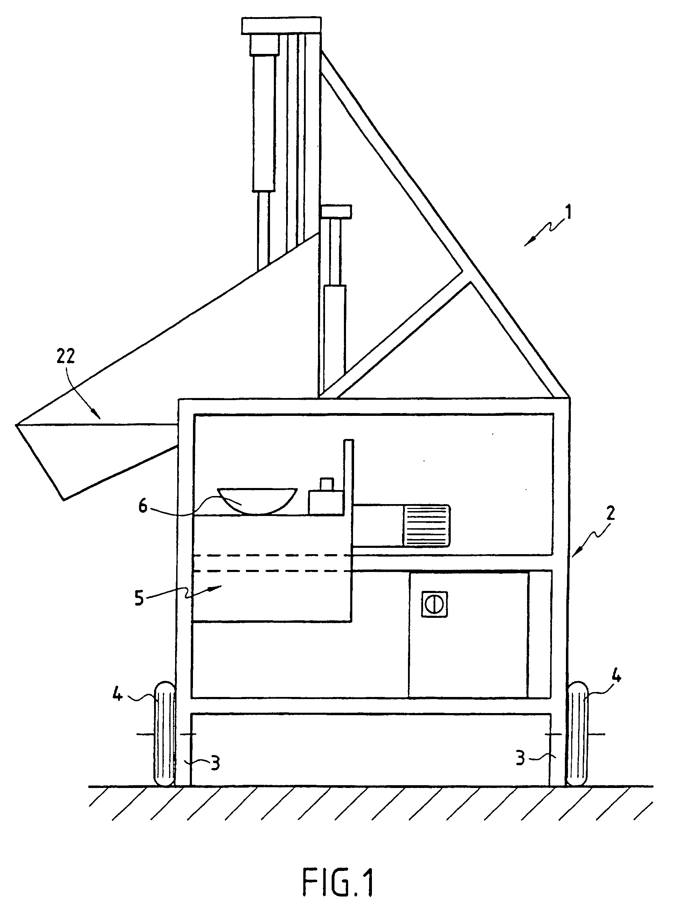

- la figure 1 est une vue latérale d'un dispositif selon l'invention, dans un mode de réalisation ;
- la figure 2 est une vue schématique de face d'une partie du dispositif représenté en figure 1 ;
- la figure 3 est une vue schématique latérale de la partie de dispositif représentée en figure 2 ;
- la figure 4 est une vue en perspective partielle d'un mode de réalisation des moyens support d'inflorescence à éclater, tels que mis en oeuvre dans un dispositif selon l'invention ;
- la figure 5 est une vue en perspective schématique d'un mode de réalisation de moyens de découpe, en position fermée, tels que mis en oeuvre dans un dispositif selon l'invention ;
- la figure 6 est une vue analogue à la figure 5 d'un autre mode de réalisation de moyens de découpe, vus en position ouverte, tels que mis en oeuvre dans un dispositif selon l'invention.

Le dispositif 1 représenté sur les figures comprend un châssis principal porteur formé de profilés métalliques soudés, ou tout autre montage analogue. Ce châssis 2 est avantageusement monté sur roues.

Dans le mode de réalisation représenté, le châssis 2 comprend quatre poteaux sensiblement verticaux, deux de ces poteaux 3 étant en appui au sol, les deux autres poteaux verticaux supportant des roues 4.

Dans d'autres modes de réalisation, non représentés, le châssis est porté par plus de deux roues, par exemple deux paires de roues placées suivant deux trains parallèles.

Le châssis 2 supporte un convoyeur 5 sur lequel sont montées des coupelles supports 6 pour les choux-fleurs, brocolis, romanesco, calabrese ou tout autre inflorescence équivalente devant être découpée et éclatée en fleurettes.

Dans la suite du texte, afin de simplification, il ne sera fait état que de la découpe et l'éclatement des fleurettes de chou-fleur ou brocoli, étant entendu que le dispositif selon l'invention peut être employé pour tout autre type de produit équivalent.

Ainsi qu'il apparaîtra plus complètement par la suite, les coupelles 6 sont de formes et dimensions adaptables au type et dimensions moyennes des inflorescences à découper et éclater en fleurettes. Il est ainsi possible d'adapter les coupelles aux dimensions des inflorescences, qui diffèrent, pour un type de chou donné, suivant les cultivars, suivant les degrés de maturité et les conditions de culture notamment.

Ainsi qu'il apparaîtra plus complètement par la suite, le dispositif selon l'invention comprend en plus de coupelles amovibles de type adaptables aux produits à découper et éclater en fleurettes, plusieurs autres moyens de réglage des conditions de découpe et éclatement des fleurettes. De sorte que le dispositif selon l'invention présente une grande souplesse d'utilisation.

Dans le mode de réalisation représenté, les coupelles 6 sont fixées de manière amovible sur une chaîne 7 entraînée en boucle sans fin sur une bande transporteuse 8, entre deux cylindres de renvoi extrêmes parallèles 9.

Ainsi que le comprendra l'homme du métier, les coupelles 6 peuvent, dans d'autres modes de réalisation, être déplacées suivant d'autres formes de boucles de convoyage, connues en elles-mêmes dans le domaine des convoyeurs à bande.

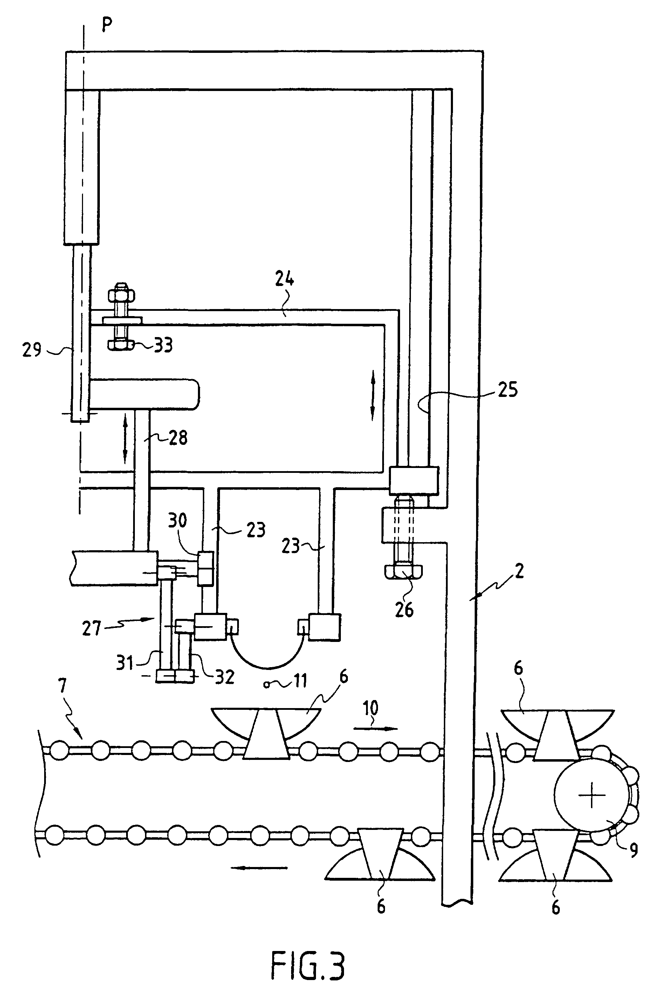

Les coupelles 6 sont entraînées suivant le flèche 10 de la figure 2 de sorte à venir au droit et en dessous d'au moins un poste 11 de découpe des fleurettes. A ce poste 11, le chou-fleur ou le brocoli est placé dans la coupelle 6 avec son trognon sensiblement vertical et disposé vers le haut, à l'opposé du fond de la coupelle 6.

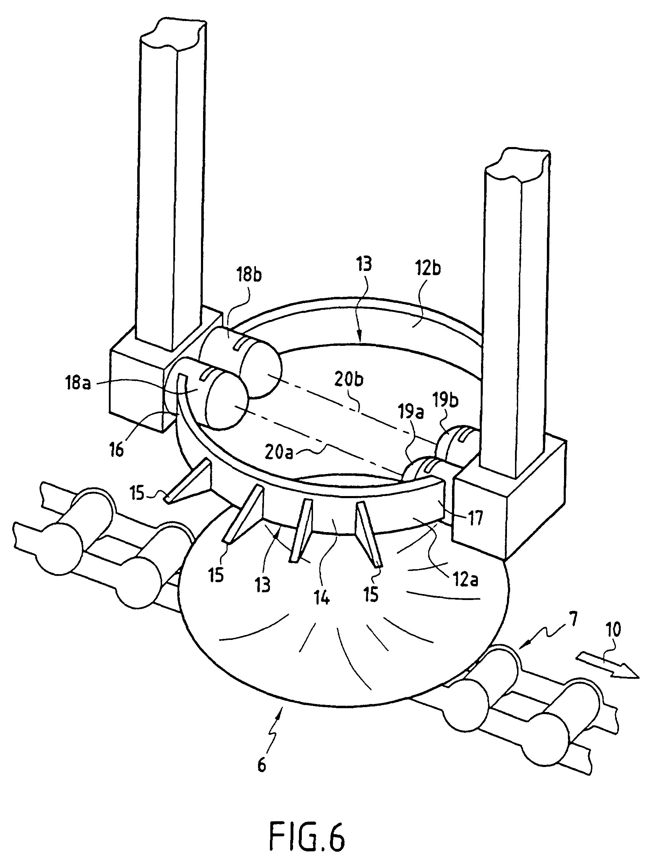

Dans cette position, ledit trognon et les pédicelles des fleurettes sont placés sur la trajectoire de fermeture d'une mâchoire à deux lames 12, la mâchoire étant alors dans une position d'ouverture du type représentée en figure 6.

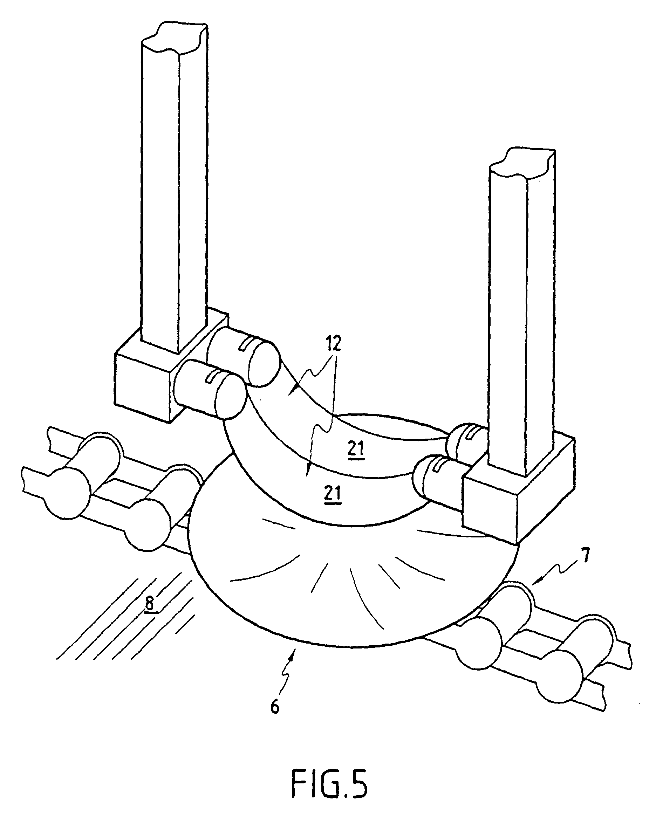

Les deux lames 12 sont en forme générale de ménisque ou pelure de quartier d'orange et leurs bords tranchants 13 sont destinés à venir en contact lorsque la mâchoire passe en position de fermeture, tel que représentée en figure 5.

Dans un mode de réalisation, représenté en figure 5, les lames 12 sont de type couteau lisse, de formes et dimensions sensiblement identiques.

Dans d'autres modes de réalisation, non représentés, les lames comportent des bords tranchants en dent de scie et/ou sont de formes et dimensions différentes.

Dans le mode de réalisation de la figure 6, les lames 12 sont pourvues sur leurs faces externes 14, de saillies tranchantes 15.

Chacune des deux lames 12 est montée, à ses deux extrémités 16,17, sur un support cylindrique 18a,18b, 19a,19b. Les supports 18a,19a d'une première des deux lames 12a sont entraînés en rotation autour d'un premier axe 20a, les supports 18b,19b de la seconde lame 12b étant entraînés en rotation autour d'un second axe 20b, sensiblement parallèle au premier axe 20a.

Dans le mode de réalisation représenté, les axes 20a,20b sont sensiblement disposés suivant la direction 10 de convoyage des coupelles 6 et parallèles au plan principal de la bande convoyeuse 8. Ainsi que le comprendra l'homme du métier, une telle disposition conduit à un dispositif compact.

Dans d'autres modes de réalisation, non représentés, les axes 20a,20b de rotation des lames 12a,12b sont sensiblement parallèles au plan principal de la bande convoyeuse 8 mais ne sont pas parallèles à la direction de convoyage 10 des coupelles 6, et sont par exemple perpendiculaires à cette direction 10.

Lorsque la mâchoire se referme, les deux lames 12 coupent les pédicelles et le trognon du chou suivant une surface de découpe demi-sphérique ou sensiblement ogivale.

Lorsque les lames sont pourvues de saillies tranchantes 15 telles que représentées en figure 6, l'éclatement du chou en fleurettes est plus complètement obtenu par la découpe supplémentaire du chou par les saillies 15.

La mâchoire étant parvenue à sa position de fermeture, le trognon découpé repose dans la cuvette formée par les faces internes 21 des lames 12. Un dispositif d'éjection, non représenté, chasse alors ce trognon vers une trémie d'évacuation. Dans la réalisation représentée, le trognon découpé est évacué suivant une direction sensiblement perpendiculaire à la direction 10 de convoyage des coupelles 6.

Le cycle de fonctionnement du dispositif selon l'invention comprend donc, selon une réalisation :
- l'avancée, suivant la direction 10, d'une coupelle 6 contenant un chou à étrogner et éclater, jusqu'en dessous d'une mâchoire à deux lames 12, dans un poste 11 de découpe, la mâchoire étant en position ouverte ;
- arrêt du mouvement de convoyage des coupelles et fermeture de la mâchoire ;
- éjection dans la trémie 22 du trognon découpé par les lames 12 ;
- ouverture de la mâchoire et avancée du convoyeur de coupelles 6 pour le départ d'un nouveau cycle.

Les fleurettes obtenues après découpe du chou par les lames 12 restent sur la coupelle qui est vidée en aval du poste de découpe 11. Dans une mise en oeuvre, les coupelles 6 sont vidées lors de leur retournement, la chaîne 7 effectuant un mouvement en boucle sans fin tel que représenté en figure 2.

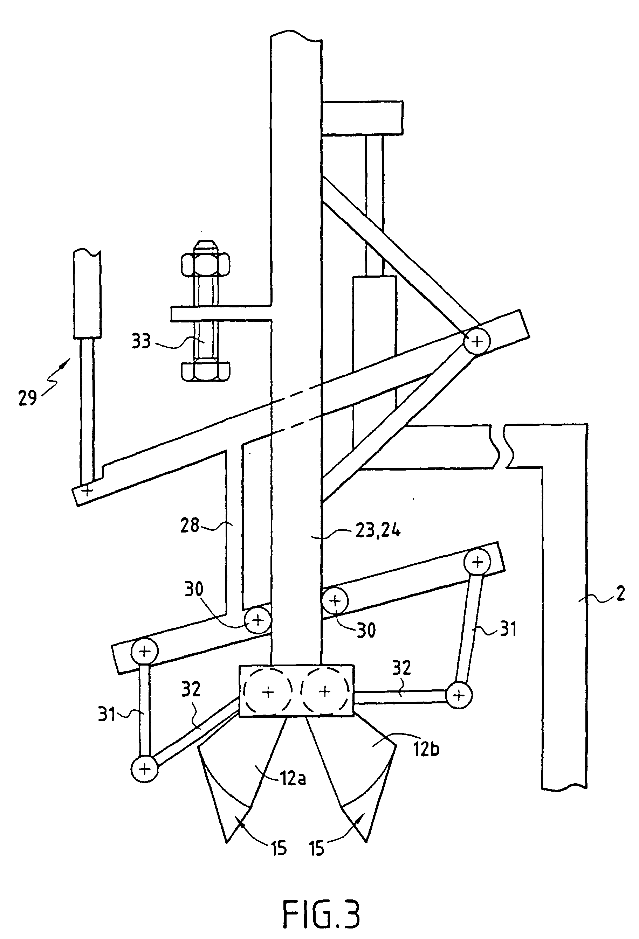

On décrit maintenant en référence aux figures 2 et 3, des moyens de commande et de réglage du mouvement des lames de mâchoire de découpe.

Les supports 18a,18b,19a,19b des lames 12 sont montés sur deux barreaux sensiblement parallèles 23 d'un tablier 24.

En position normale d'utilisation du dispositif, le tablier 24 s'étend suivant un plan vertical sensiblement perpendiculaire à la bande transporteuse 8.

Ce tablier 24 est réglable en hauteur par rapport au plan principal horizontal de cette bande 8. A cette fin, le tablier 24 est monté sur des colonnes 25 verticales solidaire du châssis 2, un vérin ou tout autre moyen analogue permettant le mouvement du tablier 24.

Le réglage en hauteur du tablier permet d'adapter le dispositif à différentes conformations de choux à étrogner. Ainsi, par exemple, lorsque seule une découpe du trognon est souhaitée, le tablier 24 sera placé à une hauteur telle que les lames 12 ne découpent que le trognon, sans éclater le chou en fleurettes. Inversement, lorsque l'opérateur souhaite non seulement étrogner le chou mais aussi l'éclater en fleurettes, le tablier 24 sera rapproché de la bande transporteuse de sorte à assurer que le mouvement des lames 12 permette une découpe en demi-sphère ou en ogive dans le cceur du chou.

Un moyen de calage et d'indexation tel qu'une vis 26 permet de bloquer le tablier dans la position constatée par l'opérateur comme bonne pour le tablier, en fonction du résultat souhaité pour une morphologie de chou donnée.

Les lames 12 sont entraînées par un mécanisme à bielles 27. Plus précisément, un chariot 28 est entraîné en déplacement alternatif par un vérin 29, ce chariot 28 étant pourvu :
- de galets d'appui 30 contre un barreau 23 à l'extrémité inférieure duquel sont montés les supports 18a,18b des lames 12 ;
- de biellettes 31,32 de liaison et d'entraînement en rotation des supports 18a, 18b autour des axes 20a,20b.

Ainsi, lorsque le chariot 28 est en position extrême basse, définie par la course imposée au vérin de commande 29, les biellettes 31,32 ont entraîné l'écartement des lames 12, ainsi qu'il est représenté en figure 3.

Le réglage de la course du vérin 29 permet d'adapter l'écartement des lames 12 en position maximum d'ouverture, cet écartement tenant compte de la taille maximum des trognons de chou à découper.

Lorsque le chariot 28 est en position extrême haute, les biellettes ont entraîné le rapprochement et le contact des lames 12. Cette position extrême haute du chariot 28 peut être réglée par la commande de la course du vérin 29 et par l'ajustement d'une butée mécanique telle qu'une vis de réglage et d'indexation 33, montée sur le tablier 24. Ce réglage permet d'assurer une force de serrage suffisante de la mâchoire, sans que les lames 12 ne soient endommagées.

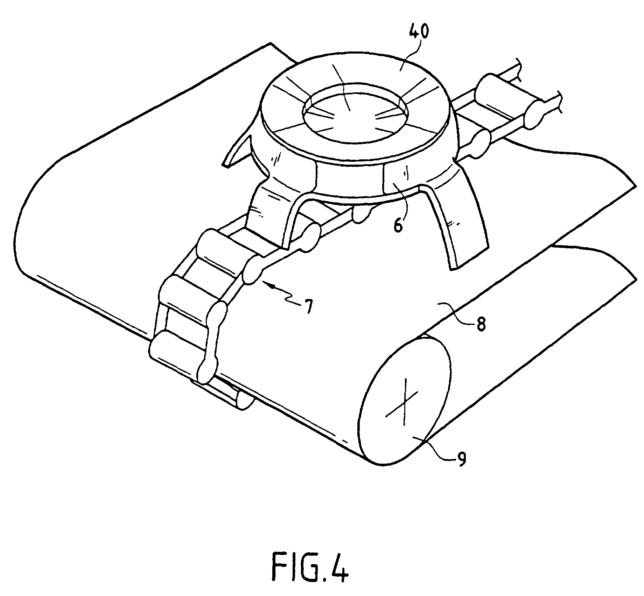

On se reporte maintenant à la figure 4.

Ainsi qu'il a été dit précédemment, les différents types de choux à pommes (choux-fleurs, brocolis, romanesco etc.) présentent des morphologies très différentes.

Pour pouvoir étrogner et éclater convenablement tous ces choux à pommes en fleurettes, le dispositif comprend :
- des moyens de réglage de la hauteur de coupe, par réglage de la hauteur du tablier 24, en fonction de la hauteur des trognons et du type de résultat souhaité (simple découpe du trognon ou éclatement complet en fleurettes);
- des moyens de réglage de l'écartement des lames 12 de mâchoire en position extrême d'ouverture, pour tenir compte de trognons de plus ou moins gros diamètres ;
- des lames 12 de différentes géométries (courbures, denture, lisses ou pourvues de saillies 15 etc.), montées de manière amovible sur les supports 18a,18b,19a,19b, permettant des découpes en demi-sphères, ogivales ou autres, en fonction des besoins ;
- des moyens de réglage de la force de découpe, le vérin 29 étant commandé en puissance en fonction de la résistance à la découpe des choux.

Un autre moyen d'adaptation du dispositif à la morphologie des choux à pommes à traiter est représenté en figure 4. Selon cette réalisation, une sur-coupelle 40 est montée amovible sur les coupelles 6.

Ainsi, par exemple, la sur-coupelle peut être conformée pour la découpe des choux romanesco, les coupelles 6 étant des coupelles ou assiettes à brocolis.

Le dispositif 1, monté sur roues, peut être amené sur les lieux de récolte des choux.

Dans un mode économique de mise en oeuvre, le dispositif n'est pas autonome en énergie, le groupe hydraulique ou la batterie d'une machine agricole s'avérant amplement suffisant pour assurer son alimentation en puissance (moteur pour le convoyeur, vérins). Bien entendu, dans d'autres modes de réalisation, le dispositif peut être pourvu de son propre groupe hydraulique de puissance ou de son propre groupe électrogène.

Sur la figure 2, un dispositif à deux postes, symétrique par rapport à un plan P vertical a été représenté.

Ainsi que le comprendra l'homme du métier, un dispositif selon l'invention peut comporter un seul poste de découpe 11, ou plus de deux postes au-dessus d'une seule chaîne de convoyage ou au-dessus de plusieurs chaînes de convoyage parallèles entre elles. Le dispositif peut comprendre des postes 11 fonctionnant selon des cycles décalés, en temps masqué.

Le dispositif selon l'invention permet des économies importantes par rapport aux machines connues antérieurement, notamment parce qu'il :
- ne nécessite que peu d'interventions manuelles ;
- n'engendre que très peu de pertes ou d'altérations des fleurettes ;
- évite le transport des trognons, qui peuvent être laissés sur les champs de récolte, le coeur des choux-fleurs ou brocolis pouvant représenter de 35 à 50% du poids total du légume ;
- réduit le temps entre récolte et préparation en vue d'une incorporation en plat cuisiné ou surgelé, les fleurettes parvenant ainsi dans un état de fraîcheur maximal sur les lieux de préparation ou surgélation des aliments.

Enfin, le dispositif selon l'invention est de structure mécanique robuste, permettant son utilisation prolongée et intensive, les pièces d'usure étant par ailleurs peu coûteuses.

## Revendications

1. Dispositif pour l'étrognage et l'éclatement en fleurettes des choux à pommes, comprenant un convoyeur de coupelles ou assiettes dans lesquelles sont plaçables les choux à pommes, ce convoyeur assurant le déplacement des coupelles selon un plan de convoyage depuis un poste de chargement des choux jusque vers au moins un poste de découpe (11) de ces choux, ce dispositif comprenant, au dit poste de découpe (11), une mâchoire à deux lames (12) en forme de ménisque pourvues chacune d'un bord tranchant (13), les lames (12) étant montées sur un tablier (24) coulissant sensiblement perpendiculairement au plan de convoyage, le dispositif comprenant des moyens de réglage de la hauteur du tablier (24) par rapport au plan de convoyage et, par la-même, de réglage de la hauteur des lames (12) par rapport aux coupelles (6), les moyens de réglage de la hauteur du tablier (24) comprenant des moyens de commande de la course d'un vérin de translation du tablier (24) sur des colonnes de guidage (25) solidaires du châssis (2) du dispositif, ce dispositif étant **CARACTERISE en ce qu'**il comprend des moyens de réglage de l'écartement des deux lames (12) de mâchoire de découpe en position extrême de l'ouverture de mâchoire.

2. Dispositif selon la revendication 1, **caractérisé en ce que** les moyens de réglage de la hauteur du tablier (24) comprennent au moins une butée d'indexation telle qu'une vis formant obstacle au mouvement de translation du tablier (24) sur des colonnes (25) de guidage du tablier.

3. Dispositif selon la revendication 1 ou 2, **caractérisé en ce que** les moyens de réglage de l'écartement des deux lames (12) de mâchoire en position extrême d'ouverture de mâchoire comprennent des moyens de commande de la course d'un vérin de translation d'un chariot (28) pourvu de biellettes (31,32) de commande d'ouverture de mâchoire.

4. Dispositif selon l'une quelconque des revendications 1 à 3, **caractérisé en ce que** les moyens de réglage de l'écartement des deux lames (12) de mâchoire en position extrême d'ouverture de mâchoire comprennent au moins une butée mécanique telle qu'une vis d'indexation formant obstacle au mouvement de translation d'un chariot (28) pourvu de biellettes (31,32) de commande d'ouverture de mâchoire.

5. Dispositif selon la revendication 3 ou 4, **caractérisé en ce que** le chariot (28) est pourvu de galets d'appui (30) contre un barreau sensiblement perpendiculaire au plan de convoyage.

6. Dispositif selon la revendication 5, **caractérisé en ce que** les galets d'appui (30) roulent sur un barreau portant à son extrémité libre inférieure, des supports (18a,18b) des lames (12).

7. Dispositif selon l'une quelconque des revendications 1 à 6, **caractérisé en ce que** les deux lames sont mobiles entre une position extrême d'écartement, correspondant à l'ouverture de mâchoire et une position d'appui l'une contre l'autre, correspondant à la fermeture de mâchoire, les extrémités d'une première lame étant montées sur des supports coaxiaux tournant suivant un premier axe (20a), les extrémités de la seconde lame de mâchoire étant montées sur des supports coaxiaux tournant suivant un deuxième axe (20b) sensiblement parallèle au premier axe (20a), les deux axes (20a,20b) étant, au poste de découpe (11), sensiblement parallèles au plan de convoyage.

8. Dispositif selon la revendication 7, **caractérisé en ce que** les deux axes (20a,20b) sont sensiblement alignés, au poste de découpe, à la direction de convoyage des coupelles (6).

9. Dispositif selon l'une quelconque des revendications 1 à 8, **caractérisé en ce que** les coupelles sont montées de manière amovible sur une chaîne de convoyage (7).

10. Dispositif selon la revendication 9, **caractérisé en ce que** la chaîne de convoyage (7) défile en boucle sensiblement verticale et comprend un brin supérieur au droit duquel sont disposés au moins un poste de découpe et un brin inférieur dans lequel les coupelles ont leur ouverture tournée vers le bas.

11. Dispositif selon la revendication 10, **caractérisé en ce que** le convoyeur est logé dans un caisson ouvert en partie supérieure, ce caisson comprenant une paroi de fond et des parois latérales, permettant les choux à pommes à tomber après découpe dans ledit caisson lors du retournement des coupelles au cours du trajet de chaîne entre son brin supérieur et son brin inférieur.

12. Dispositif selon l'une quelconque des revendications 1 à 11, **caractérisé en ce que** des sur-coupelles sont disposées de manière amovible sur les coupelles, ces sur-coupelles comprenant une partie annulaire supérieure et des pattes de fixation latérales.

## Claims

1. Device for coring and separating cauliflower, broccoli and other similar vegetables into florets, comprising a bowl or dish conveyor in which the vegetables can be placed, this conveyor moving the bowls along a conveying plane from a vegetable loading station to at least one vegetable cutting station (11), this device including, at the said cutting station (11), a jaw with two crescent shaped blades (12), each having a cutting edge (13), the blades (12) being mounted on an apron (24) which slides more or less perpendicular to the conveying plane, the device having means of setting the height of the apron (24) in relation to the conveying plane and, likewise, for setting the height of the blades (12) in relation to the bowls (6), the means of setting the height of the apron (24) including means of operating a cylinder for linear movement of the apron (24) on guide columns (25) integral with the frame (2) of the device, this device being **CHARACTERISED in that** it includes means of setting the spacing of the two cutting jaw blades (12) in the widest jaw opening position.

2. Device according to Claim 1, **characterised in that** the means of setting the height of the apron (24) include at least one indexing stop such as a bolt acting as an obstacle to the linear movement of the apron (24) on the apron guide columns (25).

3. Device according to Claim 1 or 2, **characterised in that** the means of setting the spacing of the two jaw blades (12) in the widest jaw opening position comprise means of operating the stroke of a cylinder for linear movement of a slide (28) provided with connecting rods (31, 32) for operating the jaw.

4. Device according to any one of the Claims 1 to 3, **characterised in that** the means of setting the spacing of the two jaw blades (12) in the widest jaw opening position include at least one mechanical stop such as an indexing bolt forming an obstacle to the linear movement of a slide (28) provided with connecting rods (31, 32) for operating the jaw.

5. Device according to Claim 3 or 4, **characterised in that** the slide (28) is provided with supporting rollers (30) against a bar more or less perpendicular to the conveying plane.

6. Device according to Claim 5, **characterised in that** the supporting rollers (30) roll on a bar which has supports (18a, 18b) for the blades (12) at its lower free end.

7. Device according to any one of the Claims 1 to 6, **characterised in that** the two blades can move between an extreme spacing position, corresponding to the jaw opening, and a position for support one against the other, corresponding to closing of the jaw, the ends of a first blade being mounted on coaxial supports turning in conformity with a first axis (20a), the ends of the second jaw blade being mounted on coaxial supports turning in conformity with a second axis (20b), more or less parallel with the first axis (20a), the two axes (20a, 20b) being, at the cutting station (11), more or less parallel to the conveying plane.

8. Device according to Claim 7, **characterised in that** the two axes (20a, 20b) are more or less aligned, at the cutting station, with the direction of conveying the bowls (6).

9. Device according to any one of the Claims 1 to 8, **characterised in that** the bowls are removably mounted on a conveyor line (7).

10. Device according to Claim 9, **characterised in that** the conveyor line (7) proceeds in a more or less vertical loop and has a top strand at right angles with which at least one cutting station is arranged, and a bottom strand in which the openings of the bowls are turned downward.

11. Device according to Claim 10, **characterised in that** the conveyor is housed in a casing open at the top, this casing having a bottom wall and side walls allowing the cauliflower, broccoli and similar vegetables to fall, after cutting, into the said casing when the bowls turn over as the line travels between its upper and lower strands.

12. Device according to any one of the Claims 1 to 11, **characterised in that** bowl tops are removably arranged on the bowls, these tops comprising an upper annular part and side fixing lugs.

## Patentansprüche

1. Vorrichtung zum Entfernen des Strunkes und Abtrennen der Röschen von Kopfkohl, umfassend einen Förderer mit Schalen oder Tellern, in denen die Kohlköpfe angeordnet werden können, wobei dieser Förderer die Verschiebung der Schalen entlang einer Förderebene von einer Aufgabestation des Kohls bis zu mindestens einer Schneidestation (11) dieses Kohls sicherstellt, wobei diese Vorrichtung an der sogenannten Schneidestation (11) eine Klemmbacke mit zwei sichelförmigen Blättchen (12) umfasst, die jeweils mit einer Schneidkante (13) versehen sind, wobei die Blättchen (12) auf einem Tisch (24) befestigt sind, der im Wesentlichen senkrecht auf die Förderebene gleitet, wobei die Vorrichtung Mittel zur Einstellung der Höhe des Tisches (24) in Bezug auf die Förderebene und dadurch zur Einstellung der Höhe der Blättchen (12) in Bezug auf die Schalen (6) umfasst, wobei die Mittel zur Höheneinstellung des Tisches (24) Mittel zur Steuerung des Hubs des Translationszylinders des Tisches (24) auf Führungssäulen (25), die fest mit dem Gestell (2) der Vorrichtung verbunden sind, umfasst, wobei diese Vorrichtung **dadurch GEKENNZEICHNET ist, dass** sie Mittel zur Einstellung des Abstandes der beiden Blättchen (12) der Schneidklemmbacke in äußerster Öffnungsposition der Klemmbacke umfasst.

2. Vorrichtung nach Anspruch 1, **dadurch gekennzeichnet, dass** die Mittel zur Höheneinstellung des Tisches (24) mindestens einen Indexierungsanschlag umfassen, wie beispielsweise ein Schraube, die ein Hindernis für die Translationsbewegung des Tisches (24) auf Führungssäulen (25) des Tisches darstellt.

3. Vorrichtung nach Anspruch 1 oder 2, **dadurch gekennzeichnet, dass** die Mittel zur Einstellung des Abstandes der beiden Blättchen (12) der Klemmbacke in der äußersten Öffnungsposition der Klemmbacke Mittel zur Steuerung des Hubs eines Translationszylinders eines Wagens (28) umfassen, der mit Schwingarmen (31, 32) zur Steuerung der Öffnung der Klemmbacke versehen ist.

4. Vorrichtung nach einem der Ansprüche 1 bis 3, **dadurch gekennzeichnet, dass** die Mittel zur Einstellung des Abstandes der beiden Blättchen (12) der Klemmbacke in der äußersten Öffnungsposition der Klemmbacke mindestens einen mechanischen Anschlag, wie beispielsweise eine Indexierungsschraube, umfassen, die ein Hindernis für die Translationsbewegung eines Wagens (28), der mit Schwingarmen (31, 32) zur Steuerung der Öffnung der Klemmbacke versehen ist, bilden.

5. Vorrichtung nach Anspruch 3 oder 4, **dadurch gekennzeichnet, dass** der Wagen (28) mit Rollen (30) zur Abstützung an einem im Wesentlichen zur Förderebene senkrechten Stab versehen ist.

6. Vorrichtung nach Anspruch 5, **dadurch gekennzeichnet, dass** die Stützrollen (30) auf einem Stab rollen, der an seinem unteren freien Ende Stützen (18a, 18b) für die Blättchen (12) trägt.

7. Vorrichtung nach einem der Ansprüche 1 bis 6, **dadurch gekennzeichnet, dass** die beiden Blättchen zwischen einer äußersten Entfernungsposition, die der Öffnung der Klemmbacke entspricht, und einer Position der Abstützung gegeneinander, die dem Verschluss der Klemmbacke entspricht, beweglich sind, wobei die Enden eines ersten Blättchens auf koaxialen Stützen befestigt sind, die sich entlang einer ersten Achse (20a) drehen, wobei die Enden des zweiten Blättchens auf koaxialen Stützen befestigt sind, die sich entlang einer zweiten Achse (20b) drehen, die im Wesentlichen zur ersten Achse (20a) parallel ist, wobei die beiden Achsen (20a, 20b) an der Schneidestation (11) im Wesentlichen zur Förderebene parallel sind.

8. Vorrichtung nach Anspruch 7, **dadurch gekennzeichnet, dass** die beiden Achsen (20a, 20b) an der Schneidestation im Wesentlichen zur Förderrichtung der Schalen (6) ausgerichtet sind.

9. Vorrichtung nach einem der Ansprüche 1 bis 8, **dadurch gekennzeichnet, dass** die Schalen abnehmbar auf einer Förderkette (7) befestigt sind.

10. Vorrichtung nach Anspruch 9, **dadurch gekennzeichnet, dass** die Förderkette (7) in einer im Wesentlichen vertikalen Schleife abläuft und einen oberen Abschnitt, zu dem im rechten Winkel mindestens eine Schneidestation angeordnet ist, und einen unteren Abschnitt umfasst, in dem die Schalen mit ihrer Öffnung nach unten ausgerichtet sind.

11. Vorrichtung nach Anspruch 10, **dadurch gekennzeichnet, dass** der Förderer in einer am oberen Teil offenen Kassette angeordnet ist, wobei diese Kassette eine Bodenwand und Seitenwände aufweist, um die Kohlköpfe nach jedem Schneiden in der Kassette beim Umdrehen der Schalen auf der Bahn der Kette zwischen ihrem oberen und unteren Abschnitt anzuordnen.

12. Vorrichtung nach einem der Ansprüche 1 bis 11, **dadurch gekennzeichnet, dass** Überschalen abnehmbar auf den Schalen angeordnet sind, wobei diese Überschalen einen oberen ringförmigen Teil und seitliche Befestigungseisen umfassen.
